# EUROPÄISCHE PATENTSCHRIFT

(11) **EP 1 191 264 B1**
(45) Veröffentlichungstag und Bekanntmachung des Hinweises auf die Patenterteilung: **24.08.2005**
(21) Anmeldenummer: 01121143.0
(22) Anmeldetag: 04.09.2001
(51) Int. Cl.: F16J 15/34

(54) **Gleitringdichtung mit Leckagesperre**
Mechanical seal with leakage barrier
Garniture mécanique avec barrière de fuite

(30) Priorität: 26.09.2000 DE 10047493
(43) Veröffentlichungstag der Anmeldung: 27.03.2002
(73) Patentinhaber: Federal-Mogul Friedberg GmbH, 86316 Friedberg (DE)
(72) Erfinder: Zutz, Hans-Henning, 42929 Wermelskirchen (DE)

(56) Entgegenhaltungen:
- DE-C- 19 753 918
- GB-A- 2 337 798
- US-A- 4 216 972

## Beschreibung

Gleitringdichtung, insbesondere Laufwerkdichtung, bestehend aus einem winkelförmigen Gleit- und Gegenring, die mit ihren radialen Dichtschenkeln eine Dichtfläche bilden, mit einem ersten und einem zweiten, ringförmigen Dichtkörper wobei im Gebrauch der erste Dichtkörper stationär und der zweite Dichtkörper umlaufend ausgebildet ist und wobei der erste Dichtkörper eine in den Bereich eines Dichtschenkels geführte Sekundärdichtung beinhaltet, wobei die Sekundärdichtung axial über die radiale Ebene der Dichtfläche hinausragt, so dass aus dem ersten Dichtkörper und Sekundärdichtung eine Wannenform gebildet ist.

Der DE PS 1 243 930 ist eine derartige Gleitringdichtung zu entnehmen. Zur Verhinderung des unmittelbaren Eintretens von Schmutz in den Dichtflächenbereich weisen die elastischen, in Form eines Quadrats mit abgerundeten Ecken und eingebuchteten Seiten ausgeführten Zwischenringe im eingebauten Zustand mit ihren nicht im Eingriff stehenden, aufeinander zu gerichteten Ecken gegeneinander und schützen so die Dichtfläche. Die im Eingriff stehenden Flächen der elastischen Zwischenringe sind einem Reibverschleiß unterlegen, die auf absehbare Zeit keinen sicheren Sitz des Gleitringpaares gewährleisten können. Eine hohe Vorspannung kann zwar den Sitz der Gleitringe sicherstellen, beschleunigt aber den Verschleiß und erhöht die ohnehin nachteiligen Kippmomente sowie die tribologischen Eigenschaften wie: Reibung und Wärmeentwicklung.

Diesen Nachteilen tritt die PS US-A 4,256,315 entgegen, in der die tellerfederförmigen Dichtkörper mit einer, in Richtung der Dichtflächen weisenden Sekundärdichtung versehen sind und sich die Sekundärdichtungen auf den Dichtschenkeln der Gleitringe radial abstützen. Die Dichtflächen werden so gegen eintretenden Schmutz geschützt ohne, dass Kippmomente oder Verschleiß die Funktion der Gleitringdichtung beeinträchtigen könnten. Der Verschleiß der Dichtkörper wird nicht ausgeschlossen aber auf ein Minimum reduziert.
Lediglich fertigungsbedingte Toleranzen können bei dieser Gleitringdichtung während der Einlaufphase zu Leckagen im Stoßbereich der Sekundärdichtungen führen. Fraglich bleibt, ob ein ausreichender Schutz für die Dichtschenkel der Gleitringdichtung gegeben ist, wenn eintretende Verunreinigungen auf den Stoßbereich der elastomeren Sekundärdichtungen treffen, die einer natürlichen Materialermüdung unterlegen sind.

Die US-A- 4216972 offenbart eine Dichtung, die als Kassettendichtung ausgebildet ist. Im Bereich des stationären Dichtkörpers ist ein metallisches Gehäuse angeordnet welches sich über den umlaufende Gleitring erstreckt, indem der Aussendurchmesser größer ausgebildet ist als der Aussendurchmesser des Gleitringes. Im Stillstand der Dichtung kann das abzudichtende Medium nach Aussen gelangen.

Der Erfindung liegt die Aufgabe zugrunde, die im gattungsbildenden Teil des Hauptanspruches beschriebene Gleitringdichtung dahingehend zu optimieren, dass eine Leckage während der Einlaufphase ausgeschlossen, beziehungsweise von außen nicht auszumachen ist und ein Eindringen von Schmutz während des Einsatzes verhindert wird.

Diese Aufgabe wird erfindungsgemäß durch die Merkmale des Patentanspruch 1 gelöst.

Vorteilhafte Weiterbildungen des Erfindungsgegenstandes sind den Unteransprüchen zu entnehmen.

Die Leckagesperre wird aus dem sich ringförmig über dem Gleitring liegenden tellerfederförmigen Dichtkörper und einer am Dichtkörper befindlichen Verlängerung gebildet. Die Verlängerung des Dichtkörpers weist axial über die Dichtschenkel und befindet sich im freien Raum zwischen dem äußeren Durchmesser der Dichtschenkel und der Bohrung zur Aufnahme der Dichtkörper.

Die Sekundärdichtung ist stets stationärseitig angeordnet und ragt in den freien Raum der Aufnahmebohrung des umlaufenden Dichtkörpers, dabei sind die äußeren und inneren Durchmesser der Sekundärdichtung stets so dimensioniert, dass sie weder die Dichtschenkel der Gleitringe, den umlaufenden Dichtkörper noch deren Aufnahmebohrung berühren.

In den verschiedenen Ausführungen orientiert sich die Sekundärdichtung an ihrem freien Ende immer in Richtung der Gleitringe, so dass eine Wanne aus Dichtkörper und Sekundärdichtung gebildet wird. In erster Linie dient die wannenförmige Ausbildung der Dichtung dem Auffangen von Leckageölen, der noch nicht eingelaufenen Dichtfläche der Dichtschenkel. Im Betrieb wird die Leckagesperre mit Schmutz gefüllt und die sehr geringe, wenige Tropfen ausmachende Ölmenge vom Schmutz aufgenommen.

Dichtkörper und Sekundärdichtung können fertigungstechnisch aus einem Werkstoff aber auch aus mehreren, den Anforderungen entsprechenden, Werkstoffen hergestellt werden. Hierbei sind Dichtkörper und Sekundärdichtung zwar aus unterschiedlichen Werkstoffen aber einteilig ausgeführt.

Je nach Anforderung und Einsatzfall kann die Sekundärdichtung auch als separates Bauteil oder aus mehreren Teilen gefertigt werden. Hierbei bildet dann das separate Bauteil oder deren Einzelteile mit dem Dichtkörper die wannenförmige Sekundärdichtung. Die einzelnen Dichtelemente können aus einem oder aus unterschiedlichen Werkstoffen bestehen. Alle separaten Elemente der Sekundärdichtung sind von ihrer Geometrie her so konzipiert, dass sie dichtend in die Aufnahmebohrung eingesetzt werden können und formschlüssig und leckagesicher verbunden sind.

Die Wannenform kann durch eine Verdickung am Ende der Sekundärdichtung gebildet werden. Die Verdickung ragt in den freien Raum zwischen Dichtkörper und Dichtschenkel und kann je nach Bauform radial nach innen gerichtet bis hinter den Dichtschenkel reichen. Je nach Festigkeit des Werkstoffs sind gegebenenfalls entsprechende Montagehilfen einzusetzen.

Der Erfindungsgegenstand ist anhand zweier Ausführungsbeispiele in den anhängigen Zeichnungen dargestellt und wie folgt beschrieben. Es zeigen
- Figur 1: Darstellung einer aus Gleit- und Gegenring gebildeten Laufwerkdichtung
- Figur 2: Darstellung einer aus Gleit- und Gegenring gebildeten Laufwerkdichtung in zweiteiliger Ausführung

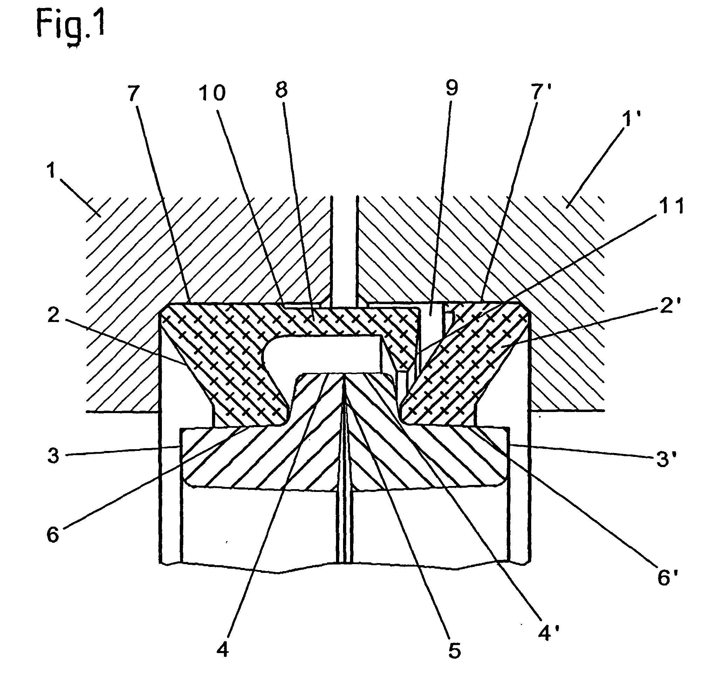

Figur 1 zeigt den axialen Schnitt durch eine Gleitringdichtung, insbesondere einer Laufwerkdichtung, bestehend aus dem die Gleitringdichtung aufnehmenden Gehäuse 1,1', dem stationären Dichtkörper 2, dem umlaufenden Dichtkörper 2' sowie dem stationären 3 und dem umlaufenden Gleitring 3'. Die Gleitringe 3,3' weisen einen winkelförmigen Querschnitt auf, die in ihrem Stoß mit den Dichtschenkeln 4,4' die Dichtfläche 5 bilden. Der zylindrische Ringrücken 6,6' dient zur Aufnahme der Dichtkörper 2,2', die die Gleitringe 3,3' in den Gehäusebohrungen 7,7' der Gehäuse 1,1' fixieren und positionieren. Die Dichtkörper dienen einerseits zur Positionierung der Gleitringe und andererseits als statische Dichtung zwischen Gleitring 6,6' und Gehäuse 1,1'. Die Sekundärdichtung 8 als axiale Verlängerung des stationären Dichtkörpers 2 ragt über die Dichtfläche 5 hinaus, in den ringförmigen Raum 9 der aus Dichtschenkel 5, Dichtkörper 2' und Gehäuse 1' gebildet wird.

In diesem ersten Ausführungsbeispiel verringert sich der Außendurchmesser 10 der Sekundärdichtung 8 noch im Bereich der Gehäusebohrung 7 derart, dass diese die Gehäusebohrung 7' nicht mehr berührt. Die Verdickung 11 am freien Ende Sekundärdichtung 8 ist radial nach innen abgewinkelt und und läuft konisch zusammen. Die Verdickung 11 endet in Höhe des äußeren Durchmessers des umlaufenden Dichtschenkels 4' und bildet so gemeinsam mit dem Dichtkörper die Wannenform.

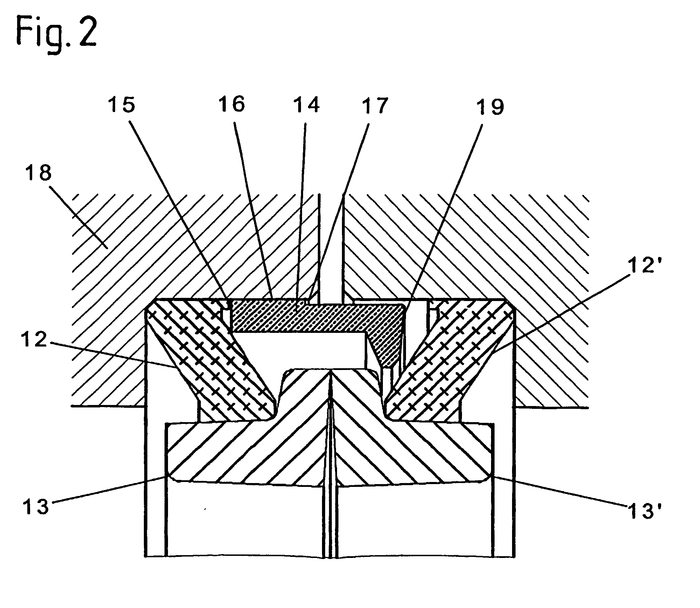

Die Figur 2 zeigt einen aquivalenten Schnitt. Die Dichtkörper 12,12' dienen auch hier zur Fixierung und Positionierung der Gleitringe 13,13'. Der die Wannenform bildene Bereich aus stationärem Dichtkörper 12 und Sekundärdichtung 14 ist zweiteilig ausgeführt, wobei in diesem Beispiel der Übergang zwischen Dichtkörper 12 und Sekundärdichtung 14 formschlüssig 15 erfolgt. Die Sekundärdichtung 14 sitzt dichtend im Gehäuse 16 und ist formschlüssig 15 und leckagesicher mit dem Dichtkörper 12 verbunden. Der äußere Durchmesser der Sekundärdichtung 12 verjüngt sich erst an der Phase 17 des sie aufnehmenden Gehäuses 18. Die axiale Erstreckung der Sekundärdichtung 14 und die radial nach innen gerichtete Verdickung 19 entsprechen im dargestellten Beispiel der Figur 1.

Dichtkörper 12 und Sekundärdichtung 14 können aus dem gleichen, aus unterschiedlichen oder auch aus mehreren Werkstoffen bestehen.

## Patentansprüche

1. Gleitringdichtung, insbesondere Laufwerkdichtung, bestehend aus einem winkelförmigen Gleit-(3, 13) und Gegenring (3', 13'), die mit ihren radialen Dichtschenkeln (4,4') eine Dichtfläche (5) bilden, mit einem ersten und einem zweiten, ringförmigen Dichtkörper (2,12,2',12') wobei in Gebrauch der erste Dichtkörper (2,12) stationär und der zweite Dichtkörper (2',12') umlaufend ausgebildet ist und wobei der erste Dichtkörper (2,12) eine in den Bereich eines Dichtschenkels (4,4') geführte Sekundärdichtung (8,14) beinhaltet, wobei die Sekundärdichtung (8,14) axial über die radiale Ebene der Dichtfläche (5) hinausragt, so dass aus dem ersten Dichtkörper (2,12) und Sekundärdichtung (8,14) eine Wannenform gebildet ist, und wobei die Sekundärdichtung (8,14) an dem ersten Dichtkörper (2,12) angeordnet ist **dadurch gekennzeichnet, dass** mindestens im Bereich des Gegenrings (3',13) der Aussendurchmesser der Sekundärdichtung (8,14) geringer ist als der Aussendurchmesser des Dichtkörpers (2,2',12,12').

2. Gleitringdichtung nach Anspruch 1, **dadurch gekennzeichnet, dass** die Sekundärdichtung (8) über den Dichtschenkel (4') des Gegenrings (3', 13') hinaus axial verlängert ist.

3. Gleitringdichtung nach einem der Ansprüche 1 und 2, **dadurch gekennzeichnet, dass** sich die Sekundärdichtung (8,14) berührungsfrei im Raum (9) erstreckt, so dass sie weder mit dem Dichtschenkel (4') noch mit dem Dichtkörper (2',12') in Kontakt kommt.

4. Gleitringdichtung nach einem der Ansprüche 1 bis 3, **dadurch gekennzeichnet, dass** die Sekundärdichtung (8,14) radial nach innen abgewinkelt ist.

5. Gleitringdichtung nach einem der Ansprüche 1 bis 4, **dadurch gekennzeichnet, dass** der Dichtkörper (2,2',12,12') tellerfederförmig ausgebildet ist.

6. Gleitringdichtung nach Anspruch 5, **dadurch gekennzeichnet, dass** der tellerfederförmige Dichtkörper (2,2',12,12') und die Sekundärdichtung (8,14) aus verschiedenen Werkstoffen bestehen.

7. Gleitringdichtung nach Anspruch 5, **dadurch gekennzeichnet, dass** der tellerfederförmige Dichtkörper (12) und die Sekundärdichtung (14) separate Bauteile sind.

8. Gleitringdichtung nach Anspruch 5, **dadurch gekennzeichnet, dass** der tellerfederförmige Dichtkörper (2) und die Sekundärdichtung (8) einstückig miteinander verbunden sind.

9. Gleitringdichtung nach Anspruch 7, **dadurch gekennzeichnet, dass** die separate Sekundärdichtung (14) dichtbar in einem Aufnahmegehäuse (18) angeordnet ist.

10. Gleitringdichtung nach einem der Ansprüche 1 bis 9, **dadurch gekennzeichnet; dass** der freie Endbereich der Sekundärdichtung (8,14) eine Verdickung (11, 19) aufweist die radial nach innen gerichtet ist.

## Claims

1. Mechanical seal, especially a mechanism seal, comprising an angular slide ring (3, 13) and an interacting ring (3', 13'), which form with their radial sealing legs (4, 4') a sealing face (5), said seal having a first and a second annular sealing body (2, 12, 2', 12'), the first sealing body (2, 12) being designed to be stationary in use and the second sealing body (2', 12') to circulate, and the first sealing body (2, 12) containing a secondary seal (8, 14) which is led into the region of a sealing leg (4, 4'), the secondary seal (8, 14) protruding axially beyond the radial plane of the sealing face (5), such that a trough shape is formed from the first sealing body (2, 12) and the secondary seal (8, 14), and the secondary seal (8, 14) being arranged at the first sealing body (2, 12), **characterised in that** at least in the region of the interacting ring (3', 13), the outside diameter of the secondary seal (8, 14) is smaller than the outside diameter of the sealing body (2, 2', 12, 12').

2. Mechanical seal according to claim 1, **characterised in that** the secondary seal (8) is extended axially beyond the sealing leg (4') of the interacting ring (3', 13').

3. Mechanical seal according to one of claims 1 and 2, **characterised in that** the secondary seal (8, 14) extends contact-free in the space (9), such that it comes into contact neither with the sealing leg (4') nor with the sealing body (2', 12').

4. Mechanical seal according to one of claims 1 to 3, **characterised in that** the secondary seal (8, 14) is angled radially inwards.

5. Mechanical seal according to one of claims 1 to 4, **characterised in that** the sealing body (2, 2', 12, 12') is designed in the shape of a disc spring.

6. Mechanical seal according to claim 5, **characterised in that** the disc-spring-shaped sealing body (2, 2', 12, 12') and the secondary seal (8, 14) comprise different materials.

7. Mechanical seal according to claim 5, **characterised in that** the disc-spring-shaped sealing body (12) and the secondary seal (14) are separate components.

8. Mechanical seal according to claim 5, **characterised in that** the disc-spring-shaped sealing body (2) and the secondary seal (8) are connected to one another as one piece.

9. Mechanical seal according to claim 7, **characterised in that** the separate secondary seal (14) is arranged in a receiving housing (18) so as to be capable of sealing.

10. Mechanical seal according to one of claims 1 to 9, **characterised in that** the free end region of the secondary seal (8, 14) has a thickened portion (11, 19) which is directed radially inwards.

## Revendications

1. Garniture d'étanchéité à anneau de glissement, en particulier garniture d'étanchéité de mécanisme de roulement, comprenant un anneau de glissement (3, 13) et un contre-anneau (3', 13') en forme d'équerre, qui définissent une surface d'étanchéité (5) avec leurs branches d'étanchéité radiales (4, 4') et comprenant un premier et un second corps d'étanchéité annulaire (2, 12, 2', 12'), d'où il en résulte qu'en utilisation le premier corps d'étanchéité (2, 12) est stationnaire et le second corps d'étanchéité (2', 12') tourne et le premier corps d'étanchéité (2, 12) comprend une garniture d'étanchéité secondaire (8, 14) allant dans la zone d'une branche d'étanchéité (4, 4'), la garniture d'étanchéité secondaire (8, 14) faisant saillie axialement au-delà du plan radial de la surface d'étanchéité (5) de telle sorte qu'une forme de carter est réalisée par le premier corps d'étanchéité (2, 12) et la garniture d'étanchéité secondaire (8, 14), la garniture d'étanchéité secondaire (8, 14) étant disposée au niveau du premier corps d'étanchéité (2, 12), **caractérisé en ce qu'**au moins dans la zone du contre-anneau (3', 13') le diamètre extérieur de la garniture d'étanchéité secondaire (8, 14) est inférieur au diamètre extérieur du corps d'étanchéité (2, 2', 12, 12').

2. Garniture d'étanchéité à anneau de glissement selon la revendication 1, **caractérisée en ce que** la garniture d'étanchéité secondaire (8) se prolonge axialement vers l'extérieur au-delà de la branche d'étanchéité (4') du contre-anneau (3', 13').

3. Garniture d'étanchéité à anneau de glissement selon l'une des revendications 1 et 2, **caractérisée en ce que** la garniture d'étanchéité secondaire (8, 14) s'étend sans contact dans l'espace (9) de telle sorte qu'elle ne vient en contact ni avec la branche d'étanchéité (4') ni avec le corps d'étanchéité (2', 12').

4. Garniture d'étanchéité à anneau de glissement selon l'une des revendications 1 à 3, **caractérisée en ce que** la garniture d'étanchéité secondaire (8, 14) est coudée radialement vers l'intérieur.

5. Garniture d'étanchéité à anneau de glissement selon l'une des revendications 1 à 4, **caractérisée en ce que** le corps d'étanchéité (2, 2', 12, 12') est réalisé sous la forme d'une rondelle ressort.

6. Garniture d'étanchéité à anneau de glissement selon la revendication 5, **caractérisée en ce que** le corps d'étanchéité (2, 2', 12, 12') sous forme de rondelle ressort et la garniture d'étanchéité secondaire (8, 14) sont réalisés à partir de matériaux différents.

7. Garniture d'étanchéité à anneau de glissement selon la revendication 5, **caractérisée en ce que** le corps d'étanchéité (12) en forme de rondelle ressort et la garniture d'étanchéité secondaire (14) sont des pièces séparées.

8. Garniture d'étanchéité à anneau de glissement selon la revendication 5, **caractérisée en ce que** le corps d'étanchéité (2) en forme de rondelle ressort et la garniture d'étanchéité secondaire (8) sont reliés ensemble de manière monobloc.

9. Garniture d'étanchéité à anneau de glissement selon la revendication 7, **caractérisée en ce que** la garniture d'étanchéité secondaire séparée (14) est disposée de manière étanche dans un logement de réception (18).

10. Garniture d'étanchéité à anneau de glissement selon l'une des revendications 1 à 9, **caractérisée en ce que** la zone d'extrémité libre de la garniture d'étanchéité secondaire (8, 14) comprend un renflement (11, 19) qui est dirigé radialement vers l'intérieur.
